# EUROPEAN PATENT APPLICATION

(11) **EP 4 557 454 A1**
(43) Date of publication of application: **21.05.2025**
(21) Application number: 22955941.4
(22) Date of filing: 22.08.2022
(51) Int. Cl.: H01M 10/613, H01M 10/625, H01M 10/6556

(54) **BATTERY TOP COVER, BATTERY AND ELECTRIC DEVICE**

(71) Applicant: Contemporary Amperex Technology Co., Limited, Ningde, Fujian 352100 (CN)
(72) Inventor: HE, Runyong, Ningde, Fujian 352100 (CN); WANG, Peng, Ningde, Fujian 352100 (CN); CHEN, Xingdi, Ningde, Fujian 352100 (CN); QIN, Feng, Ningde, Fujian 352100 (CN)
(74) Representative: Ran, Handong
(86) International application number: PCT/CN2022/113952
(87) International publication number: WO 2024/040391

(57) **Abstract**

The present application relates to a battery top cover, a battery and an electric device. The battery top cover is provided with a flow channel region and a non-flow channel region, wherein the flow channel region is used for containing a fluid so as to adjust the temperature of a battery cell, and the non-flow channel region is constructed to be incapable of containing a fluid. The battery top cover comprises: a first heat exchanger; and a second heat exchanger, comprising a first sub-heat exchanger and a second sub-heat exchanger that are connected to each other, wherein the first sub-heat exchanger is recessed relative to the second sub-heat exchanger in a direction away from the first heat exchanger, and the flow channel region is formed between the first sub-heat exchanger and the first heat exchanger, and the non-flow channel region is formed between the second sub-heat exchanger and the first heat exchanger. In addition to protecting a battery cell, the battery top cover also has the function of cooling or heating the battery cell. Moreover, the second heat exchanger is an uneven relief structure, such that the battery top cover has greater impact strength, and a better protective effect on the battery cell.

## Description

### TECHNICAL FIELD

The present application relates to the technical field of batteries, and in particular to a battery top cover, a battery, and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor related to their development.

However, the traditional battery top cover only plays a role of protecting a battery cell and has a single function.

### SUMMARY OF THE INVENTION

In view of the above problem, the present application provides a battery top cover, a battery, and an electrical apparatus, which can alleviate the problem of single function of the battery top cover.

In a first aspect, the present application provides a battery top cover, the battery top cover having a flow channel area and a non-flow channel area, the flow channel area being used to accommodate a fluid for adjusting the temperature of a battery cell, and the non-flow channel area being structured not to accommodate a fluid; the battery top cover including:
a first heat exchange member for connecting to the battery cell;
and a second heat exchange member including a first heat exchange sub-member and a second heat exchange sub-member connected to each other, the first heat exchange sub-member being recessed relative to the second heat exchange sub-member in a direction facing away from the first heat exchange member, the flow channel area being formed between the first heat exchange sub-member and the first heat exchange member, and the non-flow channel area being formed between the second heat exchange sub-member and the first heat exchange member.

Since the battery top cover has the flow channel area, a fluid can be accommodated in the flow channel area for adjusting the temperature of the battery cell. Therefore, the battery top cover not only has fixation and protection for the battery cell, but also has the function of cooling or heating the battery cell. In addition, since the second heat exchange member includes the first heat exchange sub-member and the second heat exchange sub-member connected to each other, and the first heat exchange sub-member is recessed relative to the second heat exchange sub-member in the direction facing away from the first heat exchange member, that is, the second heat exchange member is of concave-convex structure, the battery top cover has great impact strength and provides a good protection for the battery cell.

In some embodiments, the first heat exchange member is of flat plate structure. In this way, when the battery cell is connected to a side of the first heat exchange member facing away from the second heat exchange member, this is a planar contact, which facilitates the fixation of the battery cell.

In some embodiments, the flow channel area includes a plurality of intercommunicated flow channel sub-areas, and the non-flow channel area includes a plurality of non-flow channel sub-areas;
the second heat exchange member includes a plurality of first heat exchange sub-members and a plurality of second heat exchange sub-members, one flow channel sub-area being formed between each first heat exchange sub-member and the first heat exchange member, and one non-flow channel sub-area being formed between each second heat exchange sub-member and the first heat exchange member.

In the above arrangement, since the flow channel area includes the plurality of flow channel sub-areas, a fluid flows in the plurality of flow channel sub-areas to adjust uniformity of the temperature of the battery cell. In this way, since the flow channel includes the plurality of flow channel sub-areas, and correspondingly, the second heat exchange member includes the plurality of first heat exchange sub-members and the plurality of second heat exchange sub-members, the number of concave-convex structures of the second heat exchange member is increased and the impact strength of the battery top cover is further improved.

In some embodiments, the thickness of both the first heat exchange member and the second heat exchange member is 0.6 mm to 3 mm. The thickness of the first heat exchange member and the second heat exchange member is set to 0.6 mm to 3 mm, which provides a good heat exchange effect while ensuring the strength of both.

In some embodiments, in the thickness direction of the battery top cover, the depth of the flow channel area is 1 to 3 times the thickness of the first heat exchange member; and/or
the depth of the flow channel area is 2 mm to 7 mm.

In the above arrangement, the depth of the flow channel area ensures that the amount of fluid accommodated is appropriate, such that the amount of fluid accommodated is not too small, thereby ensuring the heat exchange effect while avoiding accommodating too much fluid and thus affecting the strength of the battery top cover.

In some embodiments, the first heat exchange member and the second heat exchange member are fixed by welding or bonding, thus ensuring the fixing effect for the first heat exchange member and the second heat exchange member.

In some embodiments, the material selected for the first heat exchange member is steel or aluminum; and/or the material selected for the second heat exchange member is steel or aluminum. In this way, the heat exchange effect between the first heat exchange member and the second heat exchange member is guaranteed.

In a second aspect, the present application provides a battery, including a battery cell and the battery top cover as described in the above embodiments, the battery cell being connected to a side of the first heat exchange member facing away from the second heat exchange member.

In some embodiments, the battery further includes a frame and a battery bottom cover, two ends of the frame form a top opening and a bottom opening, respectively, the battery top cover is mounted to the top of the frame to close the top opening, the battery bottom cover is mounted to the bottom of the frame to close the bottom opening, and the top cover, the frame, and the battery bottom cover define an accommodating space;
the battery cell is accommodated within the accommodating space. In the above arrangement, the battery top cover and the battery bottom cover are mounted to the top end and bottom end of the frame, respectively, such that a height of an entire box body of the battery is small, reducing a space occupied by the battery in a height direction.

In some embodiments, the frame includes a frame body and a support beam, the support beam is connected to the frame body, the frame body and the support beam together form the top opening, and the support beam is provided below the top cover in a supporting manner. In the above arrangement, since the support beam is provided below the top cover in a supporting manner, it has a good supporting effect on the battery top cover.

In a third aspect, the present application provides an electrical apparatus, including the battery as described in the above embodiments.

In some embodiments, the electrical apparatus is a vehicle, the battery top cover is the floor of the vehicle, and the side of the second heat exchange member facing away from the first heat exchange member is provided facing a passenger cabin of the vehicle. In this way, the battery top cover not only can provide the function of heat exchange with a battery cell, but also can heat or heat the passenger cabin, improving the user experience. Since the battery top cover serves as the floor of the vehicle, the utilization with respect to the entire vehicle height is greatly increased, and a battery pack with better energy can be obtained. There is a flow channel area within the battery top cover. As the floor of the vehicle, the battery top cover can better isolate the noise generated by the vehicle underbody.

The above description is only an overview of the technical solution of the present application. In order to better understand the technical means of the present application and thus implement them according to the contents of the specification, and in order to make the above and other objectives, features and advantages of the present application more obvious and understandable, the following is the Detailed Description of the present application.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the drawings:
FIG. 1 is a structural schematic diagram of a vehicle according to some embodiments of the present application;
FIG. 2 is an exploded structural schematic diagram of a battery cell according to some embodiments of the present application;
FIG. 3 is an exploded structural schematic diagram of a battery top cover according to some embodiments of the present application;
FIG. 4 is a sectional view of a fitted view of the battery top cover shown in FIG. 3;
FIG. 5 is a structural schematic diagram of a vehicle according to some other embodiments of the present application;
FIG. 6 is a sectional view of a section A-A of the vehicle shown in FIG. 5; and
FIG. 7 is an exploded structural schematic diagram of a battery according to some embodiments of the present application.
1000, vehicle; 100, battery; 200, controller; 300, motor; 10, battery top cover; 11, flow channel area; 111, flow channel sub-area; 12, non-flow channel area; 121, non-flow channel sub-area; 13, first heat exchange member; 14, second heat exchange member; 141, first heat exchange sub-member; 142, second heat exchange sub-member; 20, battery cell; 21, end cover; 21a, electrode terminal; 22, case; 23, cell assembly; 23a, tab; 30, frame; 31, frame body; 32, support beam; 40, battery bottom cover; X, length direction; Y, width direction; Z, thickness direction.

### DETAILED DESCRIPTION

To make the above objectives, features, and advantages of the present application more obvious and understandable, Detailed Description of the present application is described in detail below with reference to the drawings. In the following description, numerous specific details are set forth in order to provide a thorough understanding of the present application. However, the present application can be implemented in many ways other than those described herein, and those skilled in the art can make similar improvements without violating the content of the present application. Therefore, the present application is not limited to the specific embodiments disclosed below.

In the description of the present application, it should be understood that the orientation or positional relationships indicated by the terms "central", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the drawings and are only for facilitating the description of the present application and simplifying the description, rather than indicating or implying that the apparatus or element referred to must have a particular orientation or be constructed and operated in a particular orientation, and therefore will not be interpreted as limiting the present application.

In addition, the terms "first" and "second" are used for descriptive purposes only, and cannot be construed as indicating or implying relative importance or implicitly indicating the number of technical features indicated. Therefore, a feature defined by "first" or "second" may expressly or implicitly include at least one of the features. In the description of the present application, the meaning of "a plurality of" is at least two, for example two or three, unless otherwise explicitly and specifically defined.

In the present application, unless otherwise expressly specified and limited, the terms "mount", "link", "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements, unless otherwise specifically defined. For those of ordinary skill in the art, the specific meanings of the above terms in the present application can be understood according to specific situations.

In the present application, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over," "above" and "on top of" the second feature may be a case that the first feature is directly above or obliquely above the second feature, or only means that the level of the first feature is higher than that of the second feature. The expression the first feature being "below", "underneath" or "under" the second feature may be a case that the first feature is directly underneath or obliquely underneath the second feature, or only means that the level of the first feature is lower than that of the second feature.

It should be noted that when an element is referred to as "fixed to" or "arranged to" another element, it may be directly on the other element or there may be an intermediate element. When one element is considered to be "connected" to another element, it may be directly connected to another element or there may also be an intermediate element. The terms "perpendicular", "horizontal", "upper", "lower", "left", "right" and similar expressions used herein are for illustrative purposes only, and do not indicate that they are the only means of implementation.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand in the market is also constantly expanding.

The applicant noticed that the traditional battery top cover only plays the role of protecting the battery cell and has a single function.

In order to solve the problem of the single function of the traditional battery top cover, the applicant has found through research that the function of the battery top cover can be optimized, so that, for example, the battery top cover can not only protect the battery cell, but also cool or heat the battery cell etc.

Based on the above considerations, in order to solve the problem of single function of the battery top cover, the applicant has designed a battery top cover after in-depth research. The battery top cover has a flow channel area and a non-flow channel area, the flow channel area being used to accommodate a fluid for adjusting the temperature of a battery cell, and the non-flow channel area being structured not to accommodate a fluid. The battery top cover includes a first heat exchange member and a second heat exchange member. The first heat exchange member is used to connect to the battery cell. The second heat exchange member includes a first heat exchange sub-member and a second heat exchange sub-member connected to each other. The first heat exchange sub-member is recessed relative to the second heat exchange sub-member in a direction facing away from the first heat exchange member. The first heat exchange sub-member and the first heat exchange member form the above-mentioned flow channel area, and the above-mentioned non-flow channel area is formed between the second heat exchange sub-member and the first heat exchange member.

Since the battery top cover has the flow channel area, a fluid can be accommodated in the flow channel area for adjusting the temperature of the battery cell. Therefore, the battery top cover not only has fixation and protection functions for the battery cell, but also has the function of cooling or heating the battery cell. In addition, since the second heat exchange member includes the first heat exchange sub-member and the second heat exchange sub-member connected to each other, and the first heat exchange sub-member is recessed relative to the second heat exchange sub-member in the direction facing away from the first heat exchange member, that is, the second heat exchange member is of concave-convex structure, the battery top cover has great impact strength and provides good protection for the battery cell.

The battery top cover disclosed in the embodiments of the present application may be used, but not limited to, in an electrical apparatus, such as a vehicle, a ship, an aircraft, or the like. A power source system of an electrical apparatus may be made up using the battery top cover disclosed in the present application etc., and in this way, the battery cell may be well protected and heat management for the battery cell may be facilitated.

An embodiment of the present application provides an electrical apparatus using a battery as a power source. The electrical apparatus may be, but is not limited to, a mobile phone, a tablet, a laptop, an electric toy, an electric tool, a battery scooter, an electric car, a ship, a spacecraft, or the like. Among them, the electric toy may include a stationary or mobile electric toy, for example, a game console, an electric toy car, an electric toy ship, an electric toy aircraft, or the like, and the spacecraft may include an aircraft, a rocket, a space shuttle, a spaceship, or the like.

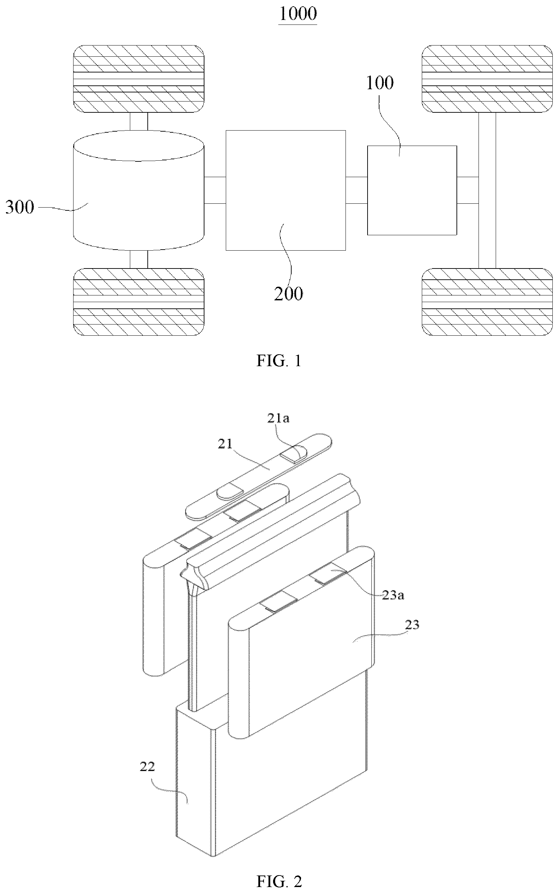

For the convenience of description in the following embodiments, referring to FIG. 1, an electrical apparatus being a vehicle 1000 according to an embodiment of the present application is taken as an example for the description.

The vehicle 1000 may be a fuel car, a gas car or a new energy car. The new energy car may be an all-electric car, a hybrid car, an extended range electric car, or the like. A battery 100 is arranged in the vehicle 1000. The battery 100 may be arranged at the bottom or head portion or tail portion of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 may not only be used as an operating power source for the vehicle 1000, but also as a driving power source for the vehicle 1000, to replace or partially replace fuel or natural gas to provide driving power for the vehicle 1000.

The battery 100 includes a box body and a battery cell 20, the battery cell 20 being accommodated within the box body. The box body includes a first portion and a second portion, the first portion and the second portion cover each other, and the first portion and the second portion jointly define an accommodating space for accommodating the battery cell 20. The second portion may be a hollow structure with an end opened, and the first portion may be a plate-like structure. In this case, the first portion constitutes the battery top cover 10 of the battery 100.

In the battery 100, there may be a plurality of battery cells 20, and the plurality of battery cells 20 may be connected in series or in parallel or in parallel-series connection, where the parallel-series connection means that the plurality of battery cells 20 are connected in both series and parallel. The plurality of battery cells 20 may be directly connected together in series or in parallel or in parallel-series connection, and then the whole composed of the plurality of battery cells 20 may be accommodated within the box body; of course, the battery 100 may also be in the form of a battery module consisting of the plurality of battery cells 20 first connected in series or in parallel or in parallel-series connection, and then a plurality of battery 100 modules may be connected in series or in parallel or in parallel-series connection to form a whole, and accommodated within the box body. The battery 100 may further include other structures, for example, the battery 100 may further include a busbar component for implementing electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cell 20 may be cylindrical, flat, cuboid, in other shapes, or the like.

The battery cell 20 is a smallest unit constituting the battery 100. Referring to FIG. 2, the battery cell 20 includes an end cover 21, a case 22, a cell assembly 23, and other functional components.

The end cover 21 is a component that covers an opening of the case 22 to isolate an internal environment of the battery cell 20 from an external environment. Without limitation, a shape of the end cover 21 may be adaptive to that of the case 22 so as to be matched with the case 22. The end cover 21 may be made of a material (such as an aluminum alloy) with a certain hardness and strength, such that the end cover 21 is less prone to deformation when pressed and collided, enabling the battery cell 20 to have a higher structural strength, and further improving the safety performance. Functional components such as an electrode terminal 21a may be provided on the end cover 21. The electrode terminals 21a can be used for being electrically connected to the battery cell assembly 23 for outputting or inputting electric energy of the battery cell 20. In some embodiments, the end cover 21 may be further provided with a pressure relief mechanism used for relieving internal pressure when the internal pressure or temperature of the battery cell 20 reaches a threshold. The end cover 21 may be made of various materials, such as copper, iron, aluminum, stainless steel, an aluminum alloy and plastic, which is not particularly limited in this embodiment of the present application. In some embodiments, an insulating member may be further arranged on an inner side of the end cover 21 and may be used for isolating an electrical connection component in the case 22 from the end cover 21, thereby reducing the risk of short circuit. Exemplarily, the insulating member may be made of plastic, rubber, etc.

The case 22 is an assembly used to be matched with the end cover 21 to form the internal environment of the battery cell 20, where the formed internal environment can be used to accommodate the battery cell assembly 23, an electrolyte and other components. The case 22 and the end cover 21 may be separate components, the opening may be formed in the case 22, and at the opening, the opening is covered with the end cover 21 so as to form the internal environment of the battery cell 20. Without limitation, the end cover 21 and the case 22 may also be integrated. Specifically, the end cover 21 and the case 22 may form a common connection surface before other components enter the case. When an interior of the case 22 is required to be encapsulated, the case 22 is covered with the end cover 21. The case 22 may be in various shapes and sizes, such as a cuboid, a cylinder and a hexagonal prism. Specifically, the shape of the case 22 may be determined according to the specific shape and size of the battery cell assembly 23. The case 22 may be made of various materials, such as copper, iron, aluminum, stainless steel, an aluminum alloy and plastic, which is not particularly limited in this embodiment of the present application.

The battery cell assembly 23 is a component in which an electrochemical reaction occurs in the battery cell 20. One or more battery cell assemblies 23 may be contained within the case 22. The cell assembly 23 is mainly formed by winding or stacking a positive electrode plate and a negative electrode plate, and a separator is usually provided between the positive electrode plate and the negative electrode plate. Portions, with active materials, of the positive electrode plate and the negative electrode plate constitute a main body part of the cell assembly 23, and portions, without the active materials, of the positive electrode plate and the negative electrode plate constitute tabs 23a, respectively. The positive tab and the negative tab may be co-located at one end of the main body part or located at two ends of the main body part, respectively. During charging and discharging of the battery 100, the positive electrode active material and the negative electrode active material react with an electrolyte solution, and the tabs 23a are connected to the electrode terminals 21a to form a current loop.

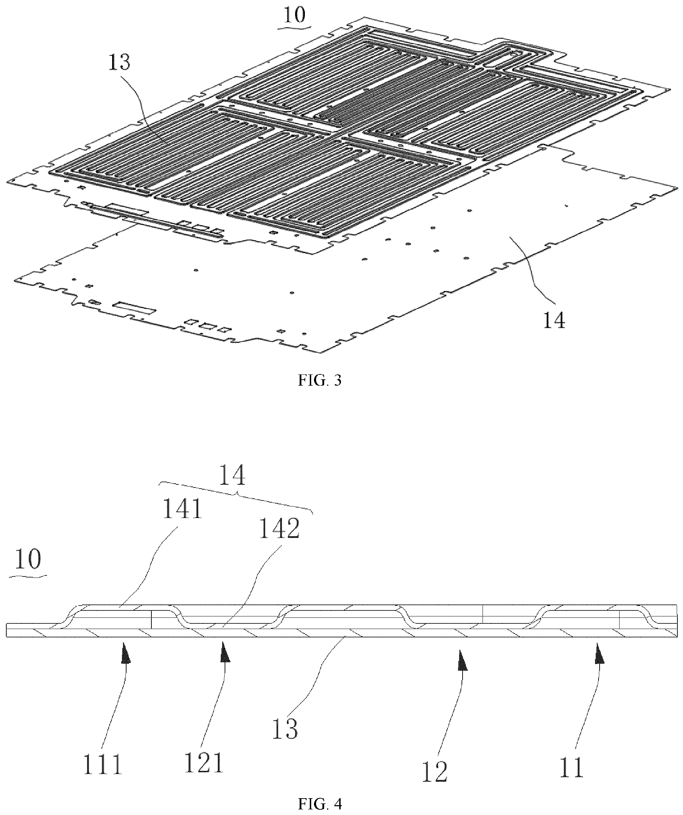

With reference to FIGS. 3 and 4, the present application provides a battery top cover 10, the battery top cover 10 having a flow channel area 11 and a non-flow channel area 12, the flow channel area 11 being used to accommodate a fluid for adjusting the temperature of the battery cell 20, and the non-flow channel area 12 being structured not to accommodate a fluid. The battery top cover 10 includes a first heat exchange member 13 and a second heat exchange member 14. The first heat exchange member 13 is used to connect to the battery cell 20. The second heat exchange member 14 includes a first heat exchange sub-member 141 and a second heat exchange sub-member 142 connected to each other. The first heat exchange sub-member 141 is recessed relative to the second heat exchange sub-member 142 in a direction facing away from the first heat exchange member 13 The first heat exchange sub-member 141 and the first heat exchange member 13 form the above-mentioned flow channel area 11, and the above-mentioned non-flow channel area 12 is formed between the second heat exchange sub-member 142 and the first heat exchange member 13.

The flow channel area 11 refers to an area for accommodating a fluid for adjusting the temperature of the battery cell 20. During cooling or heating of the battery cell 20, the fluid may circularly flow within the flow channel area 11 to transfer or take away heat. The flow channel area 11 may be in various shapes and dimensions, e. g. as a cuboid, a cylinder, and a hexagonal prism. The non-flow channel area 12 refers to an area on the battery top cover 10 that does not accommodate a fluid.

The fluid may be either a liquid or a gas. When the battery top cover 10 is used to lower the temperature of the battery cell 20, the fluid is also called a cooling medium. When the battery top cover 10 is used to raise the temperature of the battery cell 20, the fluid is also called a heating medium.

The first heat exchange member 13 and the second heat exchange member 14 are both components that can exchange heat with external components, that is, heat of the fluid can be transferred to the first heat exchange member 13 and the second heat exchange member 14, and the first heat exchange member 13 and the second heat exchange member 14 conduct the heat of the fluid into external components, such as the battery cell 20. Generally, the first heat exchange member 13 and the second heat exchange member 14 are both made of metal.

The first heat exchange sub-member 141 being recessed relative to the second heat exchange sub-member 142 in the direction facing away from the first heat exchange member 13 means that the second heat exchange member 14 is a concave-convex plate with a concave-convex provision, that is, the second heat exchange member 14 is a mold cavity plate with a mold cavity, and a wall of the mold cavity and the first heat exchange member 13 define the flow channel area 11.

Since the battery top cover 10 has the flow channel area 11, a fluid can be accommodated in the flow channel area 11 for adjusting the temperature of the battery cell 20. Therefore, the battery top cover 10 not only has fixation and protection for the battery cell 20, but also has the function of cooling or heating the battery cell 20. In addition, since the second heat exchange member 14 includes the first heat exchange sub-member 141 and the second heat exchange sub-member 142 connected to each other, and the first heat exchange sub-member 141 is recessed relative to the second heat exchange sub-member 142 in the direction facing away from the first heat exchange member 13, that is, the second heat exchange member 14 is of concave-convex structure, the battery top cover 10 has great impact strength and provides good protection for the battery cell 20.

According to some embodiments of the present application, the first heat exchange member 13 is of flat plate structure. In this way, when the battery cell 20 is connected to a side of the first heat exchange member 13 facing away from the second heat exchange member 14, this is a planar contact, which facilitates the fixation of the battery cell 20.

According to some embodiments of the present application, the flow channel area 11 includes a plurality of intercommunicated flow channel sub-areas 111, and the non-flow channel area 12 includes a plurality of non-flow channel sub-areas 121. The second heat exchange member 14 includes a plurality of first heat exchange sub-members 141 and a plurality of second heat exchange sub-members 142, one flow channel sub-area 111 being formed between each first heat exchange sub-member 141 and the first heat exchange member 13, and one non-flow channel sub-area 121 being formed between each second heat exchange sub-member 142 and the first heat exchange member 13.

The flow channel sub-area 111 is a part of the flow channel area 11, and the non-flow channel sub-area 111 is a part of the non-flow channel area 12.

In the above arrangement, since the flow channel area 11 includes the plurality of flow channel sub-areas 111, a fluid flows within the plurality of flow channel sub-areas 111 to adjust uniformity of the temperature of the battery cell 20. In addition, since the flow channel includes the plurality of flow channel sub-areas 111, and correspondingly, the second heat exchange member 14 includes the plurality of first heat exchange sub-members 141 and the plurality of second heat exchange sub-members 142, the number of concave-convex structures of the second heat exchange member 14 is increased and the impact strength of the battery top cover 10 is further improved.

According to some embodiments of the present application, the thickness of both the first heat exchange member 13 and the second heat exchange member 14 is 0.6 millimeters (mm) to 3 millimeters (mm).

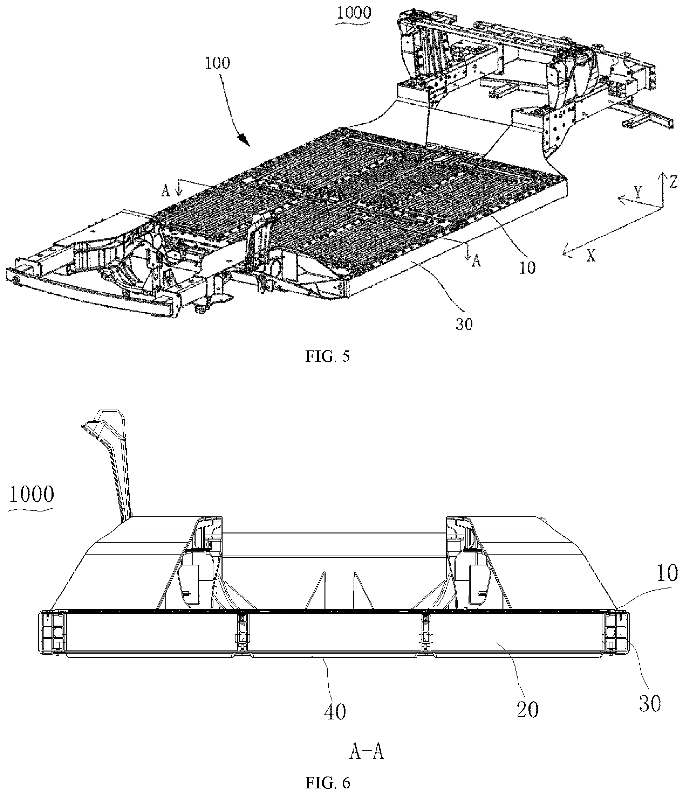

The thickness direction Z of the battery top cover 10 is a direction in which the first heat exchange member 13 and the second heat exchange member 14 cover each other, and a length direction X, a width direction Y, and the thickness direction Z (see FIG. 5) of the battery top cover 10 are perpendicular to each other. The thickness of the first heat exchange member 13 is its dimension in the thickness direction Z of the battery top cover 10, and the thickness of the second heat exchange member 14 is its dimension in the thickness direction Z of the battery top cover 10.

The thickness of the first heat exchange member 13 and the second heat exchange member 14 is set to 0.6 mm to 3 mm, which provides a good heat exchange effect while ensuring the strength of both.

It should be understood that, in some other embodiments, the thickness of the first heat exchange member 13 and the second heat exchange member 14 is not limited and may be selected as needed. In addition, the dimensions of the first heat exchange member 13 and the second heat exchange member 14 in the length direction X and the width direction Y of the top cover 10 are not limited.

According to some embodiments of the present application, in the thickness direction Z of the battery top cover 10, the depth of the flow channel area 11 is 1 to 3 times the thickness of the first heat exchange member 13; and/or the depth of the flow channel area 11 is 2 mm to 7 mm.

In the above arrangement, the depth of the flow channel area 11 ensures that the amount of fluid accommodated is appropriate, such that the amount of fluid accommodated is not too small, thereby ensuring the heat exchange effect while avoiding accommodating too much fluid and thus affecting the strength of the battery top cover 10.

It should be understood that in some other embodiments, the depth of the flow channel area 11 is not limited.

According to some embodiments of the present application, the first heat exchange member 13 and the second heat exchange member 14 are fixed by welding or bonding, thus ensuring the fixing effect of the first heat exchange member 13 and the second heat exchange member 14.

It is conceivable that in some other embodiments, the first heat exchange member 13 and the second heat exchange member 14 may also be fixed by a screw connection, which is not limited here.

According to some embodiments of the present application, the material selected for the first heat exchange member 13 is steel or aluminum; and/or the material selected for the second heat exchange member 14 is steel or aluminum. In this way, the heat exchange effect between the first heat exchange member 13 and the second heat exchange member 14 is guaranteed.

Of course, in some other embodiments, there is no limitation on the material of the first heat exchange member 13 and the second heat exchange member 14, as long as the heat exchange effect of the first heat exchange member 13 with the second heat exchange member 14 is guaranteed.

According to some embodiments of the present application, with reference to FIGS. 5-7, the present application provides a battery 100, including a battery cell 20 and the battery top cover 10 as described in any of the above schemes, the battery cell 20 being connected to a side of the first heat exchange member 13 facing away from the second heat exchange member 14.

Specifically, a bottom or side wall (non-terminal post surface) of the battery cell 20 is bonded to a plane of the first heat exchange member 13 facing away from the second heat exchange member 14, thereby facilitating the fixation of the battery cell 20.

According to some embodiments of the present application, the battery 100 further includes a frame 30 and a battery bottom cover 40, and two ends of the frame 30 form a top opening and a bottom opening, respectively. The battery top cover 10 is mounted on the top of the frame 30 to close the top opening, and the battery bottom cover 40 is mounted on the bottom of the frame 30 to close the bottom opening. The top cover, the frame 30, and the battery bottom cover 40 define an accommodating space. The battery cell 20 is accommodated within the accommodating space.

The frame 30 and the battery bottom cover 40 are both part of the second portion of the box body. The frame 30 has a structure with a hollow interior and openings at two ends. The accommodating space is a closed space with a certain volume for accommodating the battery cell 20.

It should be noted that in the thickness direction Z of the battery top cover 10, that is, in a height direction of the battery 100, the top opening and the bottom opening are located at two ends of the frame 30, respectively.

In the above arrangement, the battery top cover 10 and the battery bottom cover 40 are mounted to the top end and bottom end of the frame 30, respectively, such that a height of the entire box body of the battery 100 is small, reducing a space occupied by the battery 100 in a height direction.

According to some embodiments of the present application, the frame 30 has a hollow cuboid structure, that is, the frame 30 includes a first side portion, a second side portion, a third side portion, and a fourth side portion which are sequentially connected end to end. This facilitates the manufacture of the frame 30. It should be understood that in some other embodiments, the shape of the frame 30 may be set as needed, e.g., the frame 30 may also be a hollow cylindrical structure.

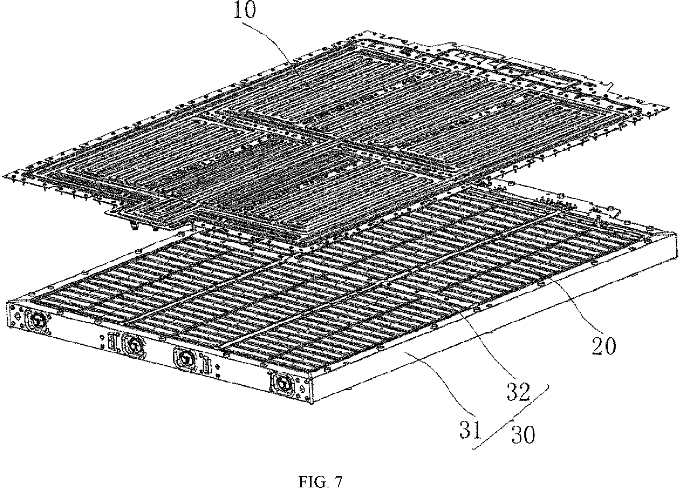

According to some embodiments of the present application, with reference to FIG. 7, the frame 30 includes a frame body 31 and a support beam 32, the support beam 32 is connected to the frame body 31, the frame body 31 and the support beam 32 together form a top opening, and the support beam 32 is provided below the top cover in a supporting manner.

The frame body 31 is a main structure of the frame 30, and the support beam 32 is a reinforcement structure for the frame 30. The support beam 32 includes a transverse beam and/or a longitudinal beam. In one specific implementation, the support beam 32 only includes a transverse beam. In another specific implementation, the support beam 32 only includes a longitudinal beam. In yet another specific implementation, the support beam 32 includes both a transverse beam and a longitudinal beam.

The transverse beam is a beam extending along the width direction Y, and the longitudinal beam is a beam extending along the length direction X.

In the above arrangement, since the support beam 32 is provided below the top cover in a supporting manner, it has a good supporting effect on the battery top cover 10.

According to some embodiments of the present application, the present application further provides an electrical apparatus, including the battery 100 described in any of the above schemes, the battery 100 being used to provide electric energy to the electrical apparatus.

According to some embodiments of the present application, the electrical apparatus is a vehicle 1000, the battery top cover 10 is the floor of the vehicle 1000, and the side of the second heat exchange member 14 facing away from the first heat exchange member 13 is provided facing the passenger cabin.

The floor is a footrest in the passenger cabin of the vehicle 1000 for passengers to step on. The side of the second heat exchange member 14 facing away from the first heat exchange member 13 is provided facing the passenger cabin of the vehicle 1000.

In this way, the battery top cover 10 not only can provide the function of heat exchange with the battery cell 20, but also can heat or heat the passenger cabin, improving the user experience. Since the battery top cover 10 serves as the floor of the vehicle 1000, the utilization with respect to the entire vehicle height is greatly increased, and the battery 100 with better energy can be obtained. There is the flow channel area 11 within the battery top cover 10. As the floor of the vehicle 1000, the battery top cover can better isolate the noise generated by the vehicle underbody.

The present application provides a battery top cover 10, the battery top cover 10 having a flow channel area 11 and a non-flow channel area 12, the flow channel area 11 being used to accommodate a fluid for adjusting the temperature of the battery cell 20, and the non-flow channel area 12 being structured not to accommodate a fluid. The flow channel area 11 includes a plurality of intercommunicated flow channel sub-areas 111, and the non-flow channel area 12 includes a plurality of non-flow channel sub-areas 121.

The battery top cover 10 includes a first heat exchange member 13 and a second heat exchange member 14. The first heat exchange member 13 and the second heat exchange member 14 are fixed by welding, and the materials used for both are steel. The first heat exchange member 13 is in flat plate structure. The second heat exchange member 14 includes a plurality of first heat exchange sub-members 141 and a plurality of second heat exchange sub-members 142, one flow channel sub-area 111 being formed between each first heat exchange sub-member 141 and the first heat exchange member 13, and one non-flow channel sub-area 121 being formed between each second heat exchange sub-member 142 and the first heat exchange member 13.

Furthermore, the thickness of both the first heat exchange element 13 and the second heat exchange element is 0.6 mm to 3 mm. In the thickness direction of the battery top cover 10, the depth of the flow channel area 11 is 1.5 times the thickness of the first heat exchange member 13.

The technical features of the above-mentioned embodiments may be combined arbitrarily. In order to make the description concise, not all possible combinations of the technical features in the above embodiments are described. However, all the combinations of the technical features should be considered as falling within the scope described in the specification provided that they do not conflict with each other.

The above embodiments only describe several implementations of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. A battery top cover, having a flow channel area (11) and a non-flow channel area (12), the flow channel area (11) being used to accommodate a fluid for adjusting the temperature of a battery cell (20), and the non-flow channel area (12) being structured not to accommodate a fluid,
the battery top cover comprising:
a first heat exchange member (13) for connecting to the battery cell (20); and
a second heat exchange member (14) comprising a first heat exchange sub-member (141) and a second heat exchange sub-member (142) connected to each other, the first heat exchange sub-member (141) being recessed relative to the second heat exchange sub-member (142) in a direction facing away from the first heat exchange member (13), the flow channel area (11) being formed between the first heat exchange sub-member (141) and the first heat exchange member (13), and the non-flow channel area (12) being formed between the second heat exchange sub-member (142) and the first heat exchange member (13).

2. The battery top cover according to claim 1, wherein the first heat exchange member (13) is of flat plate structure.

3. The battery top cover according to claim 1 or 2, wherein the flow channel area (11) comprises a plurality of intercommunicated flow channel sub-areas (111), and the non-flow channel area (12) comprises a plurality of non-flow channel sub-areas (121); and
the second heat exchange member (14) comprises a plurality of first heat exchange sub-members (141) and a plurality of second heat exchange sub-members (142), one flow channel sub-area (111) being formed between each first heat exchange sub-member (141) and the first heat exchange member (13), and one non-flow channel sub-area (121) being formed between each second heat exchange sub-member (142) and the first heat exchange member (13).

4. The battery top cover according to any one of claims 1 to 3, wherein the thickness of both the first heat exchange member (13) and the second heat exchange member (14) is 0.6 mm to 3 mm.

5. The battery top cover according to any one of claims 1 to 4, wherein in the thickness direction (Z) of the battery top cover, the depth of the flow channel area (11) is 1 to 3 times the thickness of the first heat exchange member (13); and/or
the depth of the flow channel area (11) is 2 mm to 7 mm.

6. The battery top cover according to any one of claims 1 to 5, wherein the first heat exchange member (13) and the second heat exchange member (14) are fixed by welding or bonding.

7. The battery top cover according to any one of claims 1 to 6, wherein the material selected for the first heat exchange member (13) is steel or aluminum; and/or
the material selected for the second heat exchange member (14) is steel or aluminum.

8. A battery (100), comprising a battery cell (20) and the battery top cover of any one of the claims 1 to 7, the battery cell (20) being connected to a side of the first heat exchange member (13) facing away from the second heat exchange member (14).

9. The battery (100) according to claim 8, wherein the battery (100) further comprises a frame (30) and a battery bottom cover (40), two ends of the frame (30) form a top opening and a bottom opening, respectively, the battery top cover is mounted to the top of the frame (30) to close the top opening, the battery bottom cover (40) is mounted to the bottom of the frame (30) to close the bottom opening, and the top cover, the frame (30), and the battery bottom cover (40) define an accommodating space; and
the battery cell (20) is accommodated within the accommodating space.

10. The battery (100) according to claim 9, wherein the frame (30) comprises a frame body (31) and a support beam (32), the support beam (32) is connected to the frame body (31), the frame body (31) and the support beam (32) together form the top opening, and the support beam (32) is provided below the top cover in a supporting manner.

11. An electrical apparatus, comprising the battery (100) of any one of claims 8 to 10.

12. The electrical apparatus according to claim 11, wherein the electrical apparatus is a vehicle (1000), the battery top cover is the floor of the vehicle (1000), and a side of the second heat exchange member (14) facing away from the first heat exchange member (13) is provided facing a passenger cabin of the vehicle (1000).
